# EUROPEAN PATENT SPECIFICATION

(11) **EP 1 918 705 B1**
(45) Date of publication and mention of the grant of the patent: **23.12.2009**
(21) Application number: 06123149.4
(22) Date of filing: 30.10.2006
(51) Int. Cl.: G01N 30/20, G01F 1/684

(54) **Controlled Trapping Process**
Gesteuerter Einfangprozess
Processus de piégeage contrôlé

(43) Date of publication of application: 07.05.2008
(73) Proprietor: Agilent Technologies, Inc., Santa Clara, CA 95051 (US)
(72) Inventor: Weissgerber, Hans-Georg, 75334, Straubenhardt (DE)
(74) Representative: Barth, Daniel Mathias

(56) References cited:
- EP-A- 1 536 228
- EP-A1- 0 444 299
- WO-A-2005/088296
- WO-A-2005/091936
- US-B1- 6 341 520

## Description

### BACKGROUND ART

The present invention relates to a liquid chromatography system, and to a method of loading a sample into a trapping system.

U.S. Patent No. 6,813,944 describes a flow sensor. The flow sensor comprises a semiconductor device on which a heat source and, symmetrically thereto, two temperature sensors are arranged. The semiconductor device is arranged on an exterior side of a tube section, and a liquid, the flow velocity of which has to be measured, is led through the tube section. The temperature sensors and the heat source are in thermal contact with the exterior side of the tube section. It has been found that such an assembly allows carrying out flow measurements with high accuracy and sensitivity.

[0002a] Methods and systems for characterizing a sorbent tube are known from WO 2005/088296 A1. WO 2005/091936 A2 discloses an HPLC sample introduction with bubble detection. A dual loop autosampling is known from EP 1536228 A1 by the same applicant wherein a metering device and sample loops of well defined volume are employed. An apparatus of analyzing breath sample is described in US 6,341,520 B1 wherein a quantity of breath is concentrated in a trapping column and calculated from a mass flow rate.

### DISCLOSURE

It is an object of the invention to provide an improved control of the trapping process. The object is solved by the independent claim(s). Further embodiments are shown by the dependent claim(s).

A liquid chromatography system with a trapping system according to embodiments of the present invention is adapted for performing a controlled trapping process. The trapping system comprises a trapping device adapted for trapping compounds of a fluid sample, and a control unit adapted for controlling supply of at least one of solvent and fluid sample to the trapping device based on a property related to an amount of fluid passing through the trapping device.

According to embodiments of the present invention, the property related to According to embodiments of the present invention, the property related to the amount of fluid that actually reaches the trapping device is determined, and supply of sample or solvent is controlled based on this property. Instead of determining the amount of fluid metered at a loading system, the property indicating the amount of fluid passing through the trapping system is determined at the trapping device. By controlling the supply of solvents and samples based on this property, samples and solvents can be supplied with improved precision. Furthermore, leakage in a loading system or in fluid conduits may be detected.

Due to the improved control of the trapping process, trapping processes carried out at different points of time can be performed under nearly identical conditions. For example, in different measurements, the amount of flush solvent supplied to the trapping device is nearly identical. Due to the improved precision of solvent supply and sample supply, well-defined conditions for subsequent separation processes can be established. As a consequence, analysis results acquired at different points of time become more reliable and may be compared with one another.

By controlling the supply of solvent in accordance with embodiments of the present invention, it can e.g. be assured that a predefined amount of flush solvent is supplied. The amount of flush solvent is a critical parameter. If the amount of flush solvent supplied to the trapping device is too small, salts and other moieties will remain at the trapping device and may later on affect the result of the analysis. Hence, for rinsing and cleaning the sample compounds trapped at the trapping device, a sufficient amount of flush solvent should be supplied. However, if the amount of solvent supplied to the trapping device is too large, important compounds of the sample may get lost. By implementing a trapping system according to embodiments of the present invention, a precisely controlled flush volume of solvent may be provided.

In a preferred embodiment, the property is a volumetric property.

According to a further preferred embodiment, supply of fluid to the trapping device is controlled based on monitoring the flow of fluid passing through the trapping device, or on a property related to flow. In a further preferred embodiment, control is based on a total volume of fluid that has passed through the trapping device within a period of time. For example, the volume of fluid passing through the trapping device may be determined by integrating flow over time.

In a preferred embodiment, the flow of solvent supplied to the trapping device is monitored by the control unit. Preferably, when the amount of fluid sample or solvent (or a mixture thereof) passing through the trapping device reaches a predefined limit, the control unit interrupts the supply of fluid to the trapping device. Thus, the supply of fluid is controlled in dependence on the volume of fluid that is actually passing through the trapping device, which means that fluid can be supplied with improved precision.

According to a further preferred embodiment, the control unit may detect leakage within the trapping flow path. This may e.g. be done by comparing a metered flow supplied to the trapping device with a detection signal of a flow sensor, which indicates the amount of fluid passing through the trapping device. In case the metered flow differs from the measured flow, this difference might be due to leakage. As fluid pressure gets higher and higher, problems related to leakage become more and more of an issue. For instance, smaller column particles in the trapping column require a higher loading pressure. The control unit is adapted for assuring proper functioning of the trapping system.

According to a further preferred embodiment, the trapping system comprises a detection unit fluidically coupled with the trapping device. The detection unit is adapted for determining a property related to the amount of fluid conveyed through the trapping device and through the detection unit. Instead of measuring a volume of fluid metered at a fluid supply unit, a separate detection unit is provided, in order to monitor the amount of fluid that actually arrives at the trapping device.

In a preferred embodiment, the detection unit is a flow sensor. In accordance with the rising importance of microfluidic systems, highly precise flow sensors have become available on the market, and it is expected that the cost per unit will further decrease.

According to a preferred embodiment, the detection unit is either a volumetric flow sensor or a mass flow sensor. A volumetric flow sensor determines a volume of fluid per unit time, whereas a mass flow sensor is adapted for determining a mass of fluid per unit time.

According to a preferred embodiment, the detection unit is a pressure sensor. In a further preferred embodiment, the pressure sensor is adapted for determining a pressure drop of a capillary. It is known that the pressure drop of a capillary depends on the flow of fluid passing through the capillary. The higher the flow, the higher the corresponding pressure drop of the capillary will be (cf. law of Hagen-Poiseuille). Hence, determining the pressure drop of a capillary is a good way to determine the flow of fluid passing through the capillary. For determining the flow passing through the trapping device, the capillary might e.g. be located upstream or downstream of the trapping device.

In a preferred embodiment, the detection unit is located in the trapping flow path upstream of the trapping device. The detection unit is placed in the high-pressure portion of the trapping flow path. In this embodiment, the detection unit may observe the amount of fluid that is actually flowing into the trapping device.

In a preferred embodiment, the detection unit is positioned next to the inlet of the trapping device.

According to an alternative embodiment, the detection unit is located in the trapping flow path downstream of the trapping device. In this embodiment, the detection unit is positioned in the low-pressure portion of the trapping flow path. There, the detection unit may detect the amount of fluid that has already passed the trapping device. By positioning the detection unit downstream of the trapping device, the detection unit itself does not contribute to the dead volume between the loading system and the trapping device, and as a consequence, the dead volume can be kept quite small.

In this embodiment, the sample's compounds are trapped, and downstream of the trapping device, the detection is performed. By positioning the detection unit downstream of the trapping device, it is made sure that the sample's compounds are not affected by the presence of the detection unit. For example, detection of a volumetric property may comprise applying a heat pulse to the fluid passing through the detection unit, in order to track transportation of the heat pulse. By positioning the detection unit downstream of the trapping device, it is made sure that the heat pulse does not affect the sample's compounds.

Preferably, the detection unit is located next to the outlet of the trapping device.

In yet another preferred embodiment, the detection unit comprises a first detection device located upstream of the trapping device and a second detection device located downstream of the trapping device. A detection unit of this kind provides a complete view of the flow into and out of the trapping device. In particular, effects related to the pressure drop across the trapping device become visible.

In a preferred embodiment, the trapping device is a loop that may be filled with fluid sample. The loop may either be completely or partially filled with fluid sample.

According to a preferred embodiment, supply of solvent and fluid sample to the loop is controlled such that a partial loop filling is accomplished. Especially when handling valuable samples or small injection volumes, partial loop filling is a useful feature. Embodiments of the present invention provide a precise control of sample supply, which is a prerequisite for reproducible and robust partial loop filling.

According to another preferred embodiment, the trapping device is a column filled with packing material. Further preferably, the trapping device is a trapping column.

According to another preferred embodiment, compounds of the fluid sample are trapped at the head of the trapping column. Trapping occurs as a result of the interaction between the fluidic sample and the stationary phase.

According to a further preferred embodiment, compounds of the fluid sample are accumulated at the trapping device's head. During the trapping process, the concentration of trapped sample compounds is increased. As a consequence, sensitivity of subsequent sample analysis is improved. For example, during a sample separation, measurement results with improved signal-to-noise ratio may be obtained.

The trapping system further comprises a loading system for providing at least one of fluid sample and solvent to the trapping device. The loading system is fluidically coupled with the trapping device.

In a preferred embodiment, the loading system is adapted for supplying fluidic sample plugs of predefined size to the trapping device.

In a preferred embodiment, the loading system comprises a sample supply unit for providing different fluidic samples and solvents. The sample supply unit may select one of the samples and solvents, and provide a defined volume of this fluid to the trapping device.

According to a further preferred embodiment, the sample supply unit comprises a metering device, with the metering device being adapted for drawing in a volume of solvent or sample, and for supplying a well-defined amount of the solvent or sample to the trapping device.

In a further preferred embodiment, the sample supply unit comprises a well-plate with a plurality of different samples. By using a well-plate, a large number of different samples may be processed in a sequence.

According to a preferred embodiment, after a sample plug has been supplied, the loading system provides a predefined flush volume of solvent to the trapping device.

According to embodiments of the present invention, the control unit is adapted for controlling the supply of flush volume based on the property indicating the amount of fluid passing through the trapping device. The flush volume is a critical parameter of the trapping process. The flush volume is effective to move the sample plug to the trapping device. Further preferably, the flush volume of solvent is adapted for washing interfering compou nds to the waste outlet. However, it has to be made sure that early eluting sample compounds do not get lost.

In a further preferred embodiment, the loading system comprises a flow generating device that supplies a flow of solvent to the trapping device. The flow of solvent might e.g. be used for cleaning the trapping device, e.g. during a pre-run phase, or for supplying a flush volume of solvent after the sample plug has been supplied.

In a preferred embodiment, the flow generating device is a pump, preferably a piston pump. The flow generating device might as well be a metering device.

According to a preferred embodiment, operation of the loading system is controlled based on the property related to the amount of fluid passing through the trapping device. Control is effected based on the amount of fluid that has actually arrived at the trapping device. Hence, the accuracy of the loading process is improved.

In a preferred embodiment, the beginning of the sample plug is indicated by injecting a first marker plug that precedes the sample plug. Thus, arrival of the sample plug at the trapping device may be detected.

According to a further preferred embodiment, the end of the sample plug might be indicated by injecting a second marker plug that succeeds the sample plug. The marker plugs may be easily detected. By detecting when a marker plug passes by, the beginning and/or the end of the sample plug may be determined.

According to a further preferred embodiment, the trapping system comprises a detection unit adapted for detecting an arrival of at least one of the first and the second marker plug. For example, the flow detection unit may also be used for detecting the marker plugs. Alternatively, a separate detection unit may be provided for detecting the marker plugs.

Preferably, the detection unit is located next to the inlet of the trapping device. Thus, arrival of the sample plug at the trapping column can be monitored by detecting the first sample plug. The second marker plug indicates that the entire sample plug has been supplied to the trapping device.

According to a preferred embodiment, a marker plug might e.g. consist of fluorescent dye, or of a light absorbing compound. Marker plugs of this kind may be detected using a fluorescence detection unit or an absorbance detection unit. According to another embodiment, charged compounds are used as marker plugs. A marker plug of charged compounds may be detected by determining an electrical property, like e.g. conductivity or resistance. In another embodiment, air plugs are used for delimiting the marker plug. In a further embodiment, heat pulses are used as marker plugs. The air plugs or the heat plugs may e.g. be detected using a flow sensor.

The liquid chromatography system comprises the trapping system as described above and a separation unit adapted for separating compounds of a fluid sample trapped at the trapping device. After the sample compounds have been trapped, they are supplied to the separation unit for further analysis.

According to a preferred embodiment, the liquid chromatography unit comprises a separation column. Preferably, the separation unit is an analytical system.

The separation system comprises a flow path switching unit with a sample loading position and a sample analysis position. In case the flow path switching unit is in a sample loading position, the loading system is fluidically coupled with the trapping device, and the outlet of the trapping device is fluidically coupled with a waste outlet. A sample supplied by the loading system may be trapped in the trapping device. In case the flow path switching unit is in a sample analysis position, the inlet of the trapping device is coupled with a flow generating device adapted for supplying a flow of mobile phase, and the outlet of the trapping device is fluidically coupled with the separation unit.

According to a preferred embodiment, as soon as a predefined flush volume has been supplied to the trapping device, the flow path switching unit is switched from the sample loading position to the sample analysis position.

A method of loading a sample into a trapping device according to embodiments of the present invention comprises supplying a fluid sample to the trapping device; trapping compounds of the fluid sample at the trapping device, and supplying a flush volume of solvent to the trapping device. The method further comprises determining a property of fluid passing through the trapping device, and controlling supply of at least one of the fluid sample and the solvent to the trapping device based on said property of the fluid passing through the trapping device.

Embodiments of the invention can be partly or entirely embodied or supported by one or more suitable software programs, which can be stored on or otherwise provided by any kind of data carrier, and which might be executed in or by any suitable data processing unit. Software programs or routines can be preferably applied for controlling operation of a loading system in accordance with a property related to an amount of fluid passing through the trapping device.

### BRIEF DESCRIPTION OF DRAWINGS

Other objects and many of the attendant advantages of embodiments of the present invention will be readily appreciated and become better understood by reference to the following more detailed description of embodiments in connection with the accompanied drawing(s). Features that are substantially or functionally equal or similar will be referred to by the same reference sign(s).

Fig. 1 depicts a set-up of a sample separation system comprising a trapping device;

Fig. 2 shows a sample plug and a flush volume supplied by the fluid supply unit;

Fig. 3 shows three different embodiments of the present invention;

Fig. 4 gives a more detailed view of the loading system;

Fig. 5 shows different types of flow sensors;

Fig. 6 depicts an embodiment where a sample plug is delimited by two marker plugs indicating the beginning and the end of the sample plug; and

Fig. 7 illustrates operation of a sample separation system.

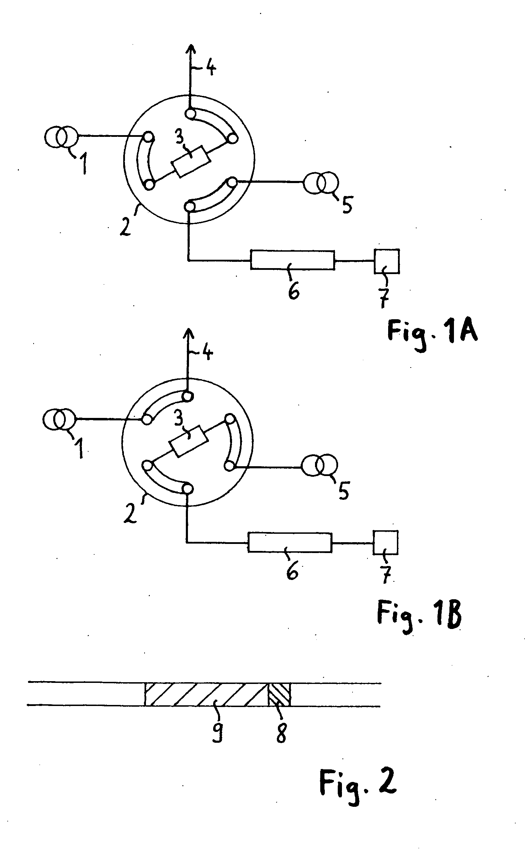

Figs. 1A and 1B depict a set-up of a sample separation system comprising a first pump 1, a switching valve 2, a trapping device 3, a waste outlet 4, a second pump 5, a separation system 6, and a detection unit 7. The switching valve 2 is adapted for switching between a sample loading flow path and a sample separation flow path.

Fig. 1A shows the sample loading flow path. Fluid supplied by the first pump 1 is conveyed through the trapping device 3, in order to trap the sample's compounds on the trapping device 3, preferably on the head of the trapping device 3. Thus, an enrichment of the fluid sample's compounds is accomplished, and the concentration of the sample compounds is increased. The trapping device 3 might e.g. be a trapping loop, or a trapping column filled with packing material. The outlet of the trapping device 3 is connected with a waste outlet 4. During the sample loading phase, the second pump 5 is fluidically connected with the separation system 6 and the detection unit 7.

After the sample's compounds have been trapped, the switching valve 2 is switched to the sample separation flow path, which is shown in Fig. 1 B. Now, the first pump 1 is directly connected with the waste outlet 4. The second pump 5 supplies a flow of solvent to the trapping device 3, and sample compounds trapped at the head of the trapping device 3 are washed to the separation system 6. The separation system 6 might e.g. be a liquid chromatography system, an electrophoresis system, etc. While passing through the separation system 6, the sample's various compounds are separated. The various different compounds appearing at the separation system's outlet may be detected by a detection unit 7. During sample analysis, the increased concentration of sample compounds leads to an improved sensitivity.

Fig. 2 shows the fluids supplied by the fluid supply unit 1. First, a well-defined plug 8 of fluid sample is supplied. After that, a flush volume 9 of solvent is provided. The flush volume 9 of solvent is adapted for transporting the sample plug 8 to the trapping device 2, and there, the sample's compounds are trapped. This implies that the flush volume 9 has to exceed the total dead volume of the conduits connecting the sample supply unit 1 with the trapping device 2. Furthermore, the flush volume 9 is effective to clean the sample compounds trapped at the trapping device 2. Interfering moieties like e.g. salts, which might disturb further analysis, are washed to the waste outlet 7.

The flush volume 9 has to be greater than the total dead volume the sample plug 8 has to traverse before reaching the trapping device 2. However, the flush volume 9 must not be too large, because otherwise, early eluting sample compounds might be washed to the waste outlet 7, which is not desirable. The early eluting sample compounds are supposed to show up in the analysis results. In general, best results are obtained when the flush volume 9 is approximately equal to 1-5 times the total dead volume of the conduits connecting the sample supply unit 1 with the trapping device 2.

An accurate control of the trapping process is important for obtaining reliable separation results at a subsequent sample separation stage. The size of the plug 8 and the flush volume 9 are critical parameters for a well-defined trapping process.

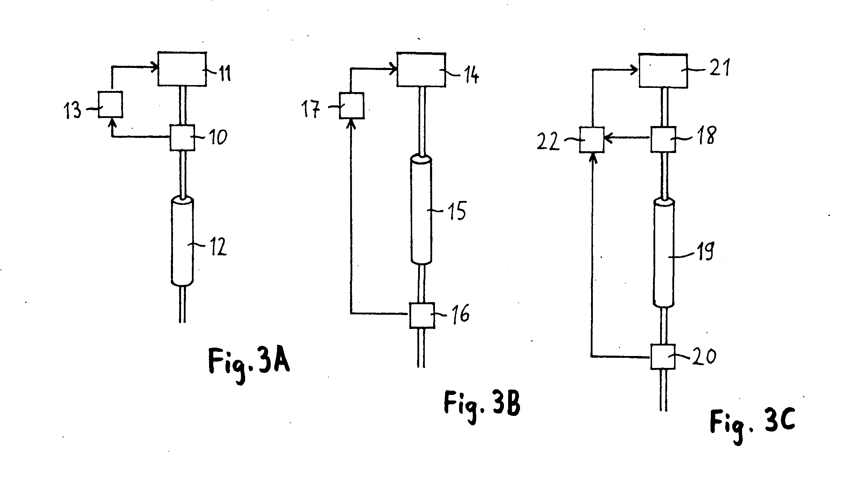

Figs. 3A, 3B and 3C show three different embodiments of the present invention. According to a first embodiment shown in Fig. 3A, a sensor 10 is placed in the flow path between the loading system 11 and the trapping device 12. Preferably, the sensor 10 is located next to the inlet of the trapping device 12. The sensor 10 is adapted for determining a volumetric property of fluids passing through the sensor 10. For example, the sensor 10 might be a flow sensor adapted for detecting volumetric flow or mass flow of samples and solvents supplied by the loading system 11. Alternatively, the sensor 10 might e.g. be adapted for determining a total volume of fluid supplied to the trapping device 12.

In the embodiment of Fig. 3A, the sensor 10 is located upstream of the trapping device. Across the trapping device 12, there is a pressure drop of typically 30 to 100 bar. Hence, the sensor 10 of Fig. 3A is located in the high pressure portion of the trapping flow path.

The sensor 10 is capable of detecting the amount of fluid that actually arrives at the trapping device's inlet. The respective volumetric property determined by the sensor 10 is forwarded to a control unit 13. Based on this volumetric property, the control unit 13 controls operation of the loading system 11 in a way that predefined volumes of sample and solvent are delivered. The control unit 13 might stop a flow of sample or solvent as soon as a predefined volume of sample or solvent has arrived at the trapping device 12.

By accurately controlling the amount of sample and solvent supplied to the trapping device 12, dependability and reliability of the trapping process is improved. Due to the improved control of the trapping process, a well-defined setting for a subsequent separation process is established. As a consequence, separation results acquired at different points of time may be compared with one another.

Furthermore, the sensor 10 may be used for detecting any kind of leakage in the loading system 11 or in the flow path between the loading system 11 and the sensor 10. If the volume of fluid metered by a metering device in the loading system 11 does not correspond to the flow detected by the sensor 10, this loss might be due to leakage.

In Fig. 3B, another embodiment of the present invention is shown. In this embodiment, the outlet of a loading system 14 is directly connected to the inlet of a trapping device 15. The outlet of the trapping device 15 is fluidically connected, via a sensor 16, with a waste outlet. The sensor 16 is adapted for determining a volumetric property (e.g. volumetric flow, mass flow, total volume) of fluid that has already passed the trapping device 15. Alternatively, the sensor 16 might e.g. be a pressure sensor adapted for determining a pressure drop of a capillary located downstream of the sensor 16. The pressure sensor determines the pressure at the capillary's inlet. The pressure at the capillary's outlet is equal to atmospheric pressure. Hence, the pressure drop of the capillary can be determined. It is known that the pressure drop is proportional to the flow of fluid passing through the capillary, as long as the flow through the capillary is a laminar flow. To get a laminar flow profile, the internal diameter of the capillary is adapted appropriately. The respective property detected by the sensor 16 is forwarded to a control unit 17, and the supply of sample and/or solvent by the loading system 14 is controlled based on said property.

In this embodiment, the sensor 16 is located downstream of the trapping device 15, in the low-pressure portion of the trapping flow path. Accordingly, the sensor 16 does not contribute to the dead volume between the loading system 14 and the trapping device 15. The sensor 16 detects the respective volumetric property after the sample compounds have been trapped. Hence, flow detection will not affect the sample compounds in any way.

In case the sensor 16 is used for leakage detection, the sensor 16 may detect leakage of the fluid supply system 14 as well as leakage of the trapping device 15.

Fig. 3C shows yet another embodiment of the present invention comprising a first detection module 18 located upstream of a trapping device 19, and a second detection module 20 located downstream of the trapping device 19. Both the first detection module 18 and the second detection module 20 are adapted for monitoring a volumetric property (e.g. volumetric flow, mass flow, total volume, etc.) of a flow of sample or solvent supplied by a loading system 21. The set-up further comprises a control unit 22 adapted for controlling operation of the loading system 21 in dependence on the respective volumetric properties determined by the first detection module 18 and the second detection module 20.

In this embodiment, the first detection module 18 is placed in the high-pressure portion of the supply flow path, and the second detection module 20 is placed in the low-pressure portion. Hence, effects that are due to the pressure drop across the trapping device 19 may be monitored. Furthermore, by determining the flow of fluid both at the trapping device's inlet and outlet, the control unit 22 may separately detect leakage of the supply flow path and of the trapping device 19. The embodiment of Fig. 3C provides a nearly perfect control of the trapping process.

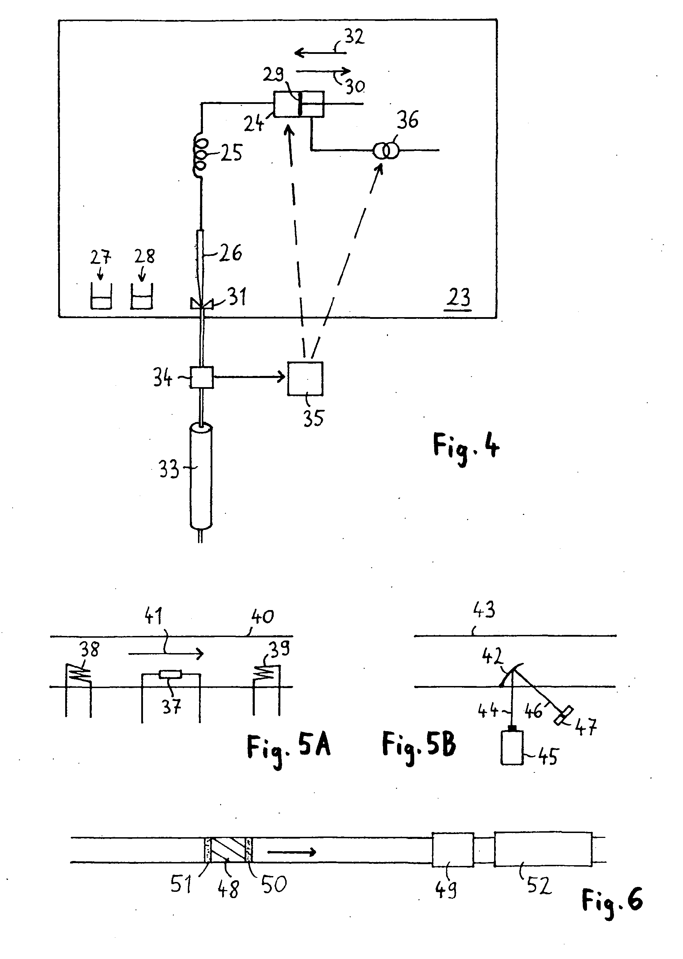

Fig. 4 shows a loading system adapted for supplying solvent and/or fluid sample to a trapping device. The loading system 23 comprises a metering device 24 that is fluidically coupled, via a loop 25, with a needle 26. The loading system 23 further comprises a plurality of wells and vessels filled with different solvents and samples. For example, vessel 27 might contain a fluid sample, and vessel 28 might be filled with a solvent. For aspirating a volume of sample, the needle 26 is moved to the vessel 27, and the metering device's piston 29 is moved to the right, as indicated by arrow 30. After a volume of sample has been aspirated, the needle 26 is moved to a needle seat 31. By moving the piston 29 to the left, as indicated by arrow 32, a well-defined sample plug may be supplied. (cf. sample plug 8 in Fig. 2)

Next, the needle 26 is moved to the vessel 28, a volume of solvent is aspirated, and the needle 26 is moved back to the needle seat 31. Then, a well-defined flush volume of solvent (cf. flush volume 9 in Fig. 2) is supplied to the trapping device 33 via a flow sensor 34. The flush volume is effective to transport the sample plug to the head of the trapping device 33, and to clean compounds of fluid sample trapped at the head of the trapping device 33.

Alternatively, both the volume of sample and the flush volume of solvent may be drawn in successively before the needle 26 is moved to the needle seat 31. Then, both the sample plug and the flush volume of solvent may be supplied to the trapping device 33 in one single step.

The flow sensor 34 detects a volumetric property related to the amount of fluid supplied to the trapping device 33. The volumetric property is forwarded to a control unit 35, which is adapted for tracking the amount of fluid supplied to the trapping device 33, and for controlling the supply of fluid to the trapping device 33 based on the amount of fluid that has already been supplied. In particular, the control unit 35 might be adapted for controlling the movement of the piston 29. As soon as a predefined volume of sample or solvent has passed the flow sensor 34, the control unit 35 stops the movement of the piston 29.

Optionally, the loading system 23 may further comprise a solvent pump 36 fluidically coupled with the metering device 24. In Fig. 4, the solvent pump 36 is indicated with dashed lines. The solvent pump 36 is adapted for providing a flow of solvent via the needle 26 and the needle port 31 to the trapping device 33. In case the loading system 23 comprises a solvent pump 36, the control unit 35 is adapted to control operation of the metering device 24 and the solvent pump 36 based on the flow parameters detected by the flow sensor 34.

During a pre-run phase, the solvent pump 36 might e.g. provide a flow of solvent for cleaning the trapping device 33. Then, a sample plug is provided by the metering device 24. Subsequently, a flush volume of solvent is supplied to the trapping device 33. The flush volume of solvent may either be supplied by the metering device 24, or by the solvent pump 36.

Figs. 5A and 5B show two different embodiments of a flow sensor. The flow sensor shown in Fig. 5A comprises a heater element 37, a first sensing element 38 located on the left side of the heater element 37, and a second sensing element 39 located on the right side of the heater element 38. Fluid is travelling in a fluid conduit 40 as indicated by arrow 41. The sensing elements 38, 39 are adapted for generating signals that vary in accordance with the fluid's temperature. For example, the sensing elements 38, 39 might be realized as thermopiles. The heater element 37 supplies a heat pulse to the fluid. Due to the flow of fluid in the fluid conduit 40, a region of increased temperature moves as a function of time. The time dependence of the signals generated by the first and the second sensing element 38, 39 is evaluated. From these signals, the direction and the velocity of the flow in the conduit 40 is derived.

A flow sensor may as well be implemented in a completely different manner. For example, the flow sensor shown in Fig. 5B comprises a spring element 42. The spring element 42 is deflected in dependence on the velocity of a fluid flowing in a conduit 43. For detecting the deflection of the spring element 42, a laser beam 44 emitted by a laser diode 45 is directed onto the spring element 42. The reflected laser beam 46 is incident upon a multi-segment diode 47. By analysing light intensity detected by the various segments of the multi-segment diode 47, the amount of deflection of the spring element 42 may be determined. The deflection of the spring element 42 indicates the direction and the velocity of the flow.

Fig. 6 illustrates how a sample plug 48 can be marked, in order to be identified by a respective detection unit 49. For example, for distinguishing the sample plug 48, the loading system might inject a first marker plug 50 that precedes the sample plug 48, and/or a second marker plug 51 that succeeds the sample plug 48.

The marker plugs 50, 51 are detected by the detection unit 49, which might e.g. be located next to the inlet of a trapping device 52. At the detection unit 49, it is determined when a marker plug passes by. In particular, by detecting the first marker plug 50, arrival of the sample plug 48 at the trapping device 52 may be detected. By detecting the second marker plug 51, it may be determined when the sample plug 48 has been completely supplied to the trapping device 52.

For detecting marker plugs, a dedicated detection unit may be provided. Alternatively, the above-described flow sensor may additionally be used for detecting marker plugs.

For example, the marker plugs may comprise fluorescent dye, with the corresponding detection unit being a fluorescence detection unit. Alternatively, the marker plugs might comprise a light absorbing compound. In this case, the detection unit might be adapted for determining transmittance of the fluid. Further alternatively, the marker plugs might comprise a charged compound, and the detection unit may determine an electrical property like e.g. conductivity or resistance. A marker plug might as well be realized as a bubble of air (air plug), or as a heat pulse. In these cases, a flow sensor of the type shown in Fig. 5A can be used for detecting the marker plug.

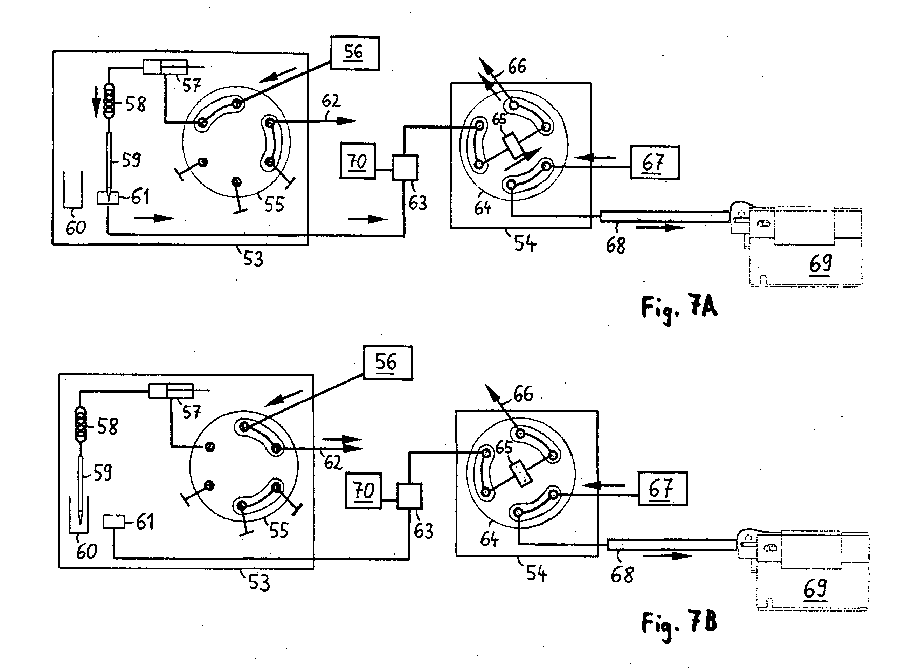

Figs. 7A to 7D show how trapping and subsequent separation of sample compounds is carried out. The hydraulic set-up shown in Figs. 7A to 7D is particularly helpful in the field of nano liquid chromatography, especially when analytical columns with an inner diameter smaller than 300 µm are used. The hydraulic set-up comprises a well-plate sampler 53 and a valve unit 54. The well-plate sampler 53 comprises a valve 55 (2 position / 6 connection), a solvent pump 56 connected to the valve 55, a metering device 57, a loop 58, a needle 59, a well 60 filled with sample, a needle seat 61, and an outlet 62. The well-plate sampler 53 is fluidically connected, via a flow sensor 63, with the valve unit 54. The valve unit 54 comprises a valve 64, a trapping column 65, an outlet 66, a nano pump 67, a separation column 68 and a mass spectroscopy device 69. The set-up might further comprise a control unit 70 for controlling the system's operation, with the flow sensor 63 being connected to the control unit 70.

Fig. 7A shows how the trapping column 65 is flushed with solvent during a pre-run phase. During the pre-run phase, the valve 55 is set to a "mainpass position". The solvent pump 56 is fluidically connected, via the metering device 57, the needle 59, the needle seat 61 to the valve unit 54. The solvent pump 56 supplies a flow of solvent to the valve unit 54. Via the flow sensor 63, the flow of solvent is directed to the trapping column 65, which is fluidically connected with the outlet 66. The trapping column 65 is flushed with solvent and prepared for the next trapping process. In the meantime, the nano pump 67 may provide a flow of solvent to the separation column 68, in order to flush the separation column 68.

Fig. 7B depicts how a volume of sample is drawn into the loop 59 of the well-plate sampler 53. For this purpose, the valve 55 of the well-plate sampler 53 is switched from the "mainpass position" to the "bypass position". In the "bypass position", the solvent pump 56 is directly connected with the waste outlet 62, and no solvent is supplied to the metering device 57 any more. Now, the needle 59 may be moved to the sample well 60, and by actuating the piston of the metering device 57, a volume of sample may be aspirated. After a volume of sample has been aspirated, the needle 59 is moved back to the needle seat 61.

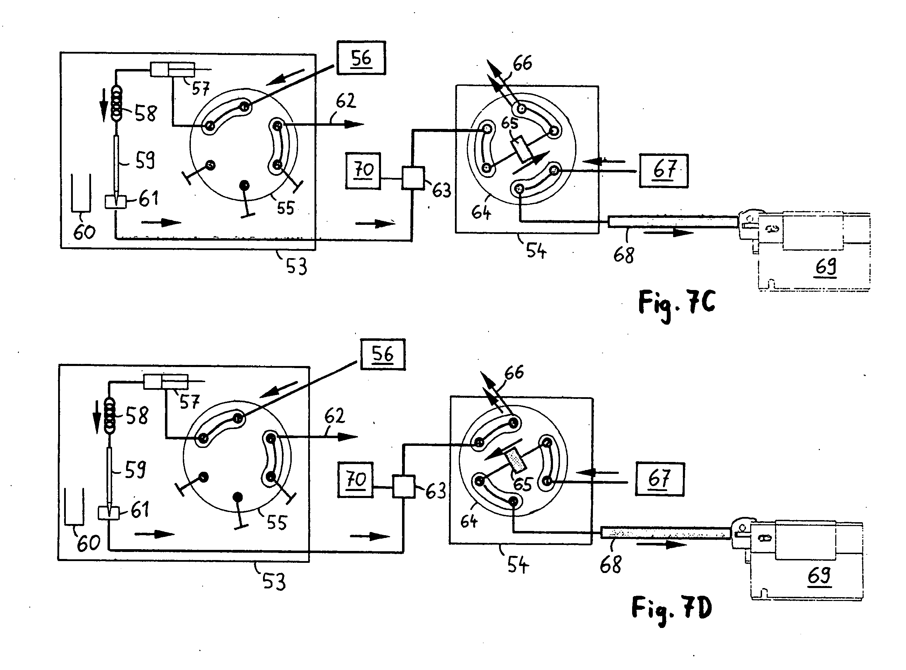

Fig. 7C depicts the system's operation during a sample loading phase. The valve 55 is switched from the "bypass position" to the "mainpass position". Now, the solvent pump 56 is fluidically connected, via the metering device 57, the loop 58, the needle 59 and the needle seat 61 to the valve unit 54. A flow of solvent is generated by the solvent pump 56, and the sample plug contained in the loop 59 is transported from the loop 59 to the trapping device 65. At the trapping device 65, the sample's compounds are trapped.

In accordance with embodiments of the present invention, the volume of sample and/or flush solvent supplied to the valve unit 54 is monitored by the flow sensor 63.

The flow sensor 63 is connected to the control unit 70, which is adapted for controlling operation of the system. In particular, the control unit 70 might be adapted for interrupting the supply of solvent as soon as a predefined flush volume of solvent has passed the flow sensor 63. For example, the control unit 70 might disable the solvent pump 56 as soon as a sufficient amount of flush solvent has been supplied. Alternatively, the control unit 70 might e.g. initiate switching of the valve 64 from a "sample loading position" to a "sample analysis position" as soon as a predefined flush volume has passed the flow sensor 63.

Fig. 7D shows how the sample compounds are analysed after the valve 64 has been switched to the "sample analysis position". Now, the trapping column 65 is part of the sample analysis flow path. The nano pump 67 is fluidically connected with the trapping column 65, and the trapping column 65 is fluidically connected with the separation column 68. The nano pump 67 supplies a solvent or a solvent gradient to the trapping column 65. The sample's compounds are eluted and transported to the separation column 68, which might e.g. be a liquid chromatography column. There, the compounds are separated according to their respective mobilities. After having passed through the separation column 68, the various compounds arrive successively at the mass spectroscopy unit 69. There, the sample's compounds are detected as a function of time.

## Claims

1. A liquid chromatography system, comprising
a separation unit (68) adapted for separating compounds of a liquid sample (8),
a trapping device (12, 15, 19, 33, 65) adapted for trapping compounds of the liquid sample,
a control unit (13, 17, 22, 35, 70) adapted for controlling supply of at least one of solvent flush volume and liquid sample to the trapping device (12, 15, 19) based on a property related to an amount of liquid passing through the trapping device (12, 15, 19),
a detection unit (10, 16, 18, 20, 34, 63) fluidically coupled with the trapping device, the detection unit being adapted for determining said property of the liquid passing through the trapping device for performing a controlled trapping process,
a loading system (11, 14, 21, 23, 53) adapted for supplying at least one of liquid sample and solvent flush volume to the trapping device, and
a flow path switching unit (64), wherein
in case the flow path switching unit is in a sample loading position, the loading system is fluidically coupled with the trapping device, and
in case the flow path switching unit is in a sample analysis position, the inlet of the trapping device is coupled with a flow generating device (67) adapted for supplying a flow of mobile phase, and the outlet of the trapping device is fluidically coupled with the separation unit (68);
wherein the control unit is adapted for stopping a flow of solvent supplied to the trapping device as soon as a total volume supplied to the trapping device has reached a predefined value.

2. The liquid chromatography system of claim 1, wherein
said property is one of: a volumetric property, flow of a liquid passing through the trapping device, a total volume of liquid that has passed through the trapping device, a property related to flow.

3. The liquid chromatography system of claim 1 or 2, wherein the control unit is adapted for at least one of:
monitoring the flow of solvent supplied to the trapping device;
detecting leakage by comparing a metered flow with a flow determined by the detection unit.

4. The liquid chromatography system of any one of claims 1-3, wherein:
the detection unit is at least one of: a flow sensor, a volumetric flow sensor, a mass flow sensor, and a pressure sensor with preferably the pressure sensor being adapted for determining a pressure drop of a capillary located upstream or downstream of the trapping device.

5. The liquid chromatography system of any one of the claims 1-4, comprising at least one of:
the detection unit is located upstream of the trapping device;
the detection unit is located next to the inlet of the trapping device, with the detection unit's outlet being fluidically coupled with the trapping device's inlet.

6. The liquid chromatography system of any one of the claims 1-4, comprising at least one of:
the detection unit is located downstream of the trapping device;
the detection unit is located next to the outlet of the trapping device, with the trapping device's outlet being fluidically coupled with the detection unit's inlet.

7. The liquid chromatography system of any one of the claims 1-4, comprising at least one of:
the detection unit comprises a first detection device located upstream of the trapping device and a second detection device located downstream of the trapping device.

8. The liquid chromatography system of any one of the above claims, wherein:
the trapping device is a loop adapted for being partly or completely filled with a liquid sample, wherein preferably the control unit is adapted for controlling supply of solvent and liquid sample to the loop such that a complete or partial loop filling is accomplished;

9. The liquid chromatography system of any one of the above claims, further comprising one or more of:
the trapping device is a column filled with packing material;
the trapping device is a trapping column;
the trapping device is adapted for accomplishing an enrichment of compounds of the liquid sample passing through the trapping device.

10. The liquid chromatography system of any of the above claims, wherein the loading system comprises a sample supply unit, the system further comprises one or more of:
the sample supply unit is adapted for selecting one out of the plurality of different samples and solvents, and for supplying a well-defined volume of the selected liquid sample to the trapping device;
the sample supply unit comprises a metering device, the metering device being adapted for aspirating a well-defined volume of the liquid sample, and for supplying the volume of liquid sample to the trapping device;
the sample supply unit comprises a well-plate with a plurality of different samples.

11. The liquid chromatography system of any one of the above claims, wherein as soon as a predefined solvent flush volume has been supplied to the trapping device, the flow path switching unit is switched from the sample loading position to the sample analysis position.

12. A method of loading a fluid sample (8) into a trapping device (12, 15, 19), the method comprising:
supplying the fluid sample (8) to the trapping device (12, 15, 19);
trapping compounds of the fluid sample (8) at the trapping device;
supplying a flush volume (9) of solvent to the trapping device (12, 15, 19);
determining a property related to an amount of fluid passing through the trapping device;
controlling supply of at least one of the fluid sample and the solvent flush volume to the trapping device (12, 15, 19) based on said property of the fluid passing through the trapping device, and
stopping a flow of solvent supplied to the trapping device as soon as a total volume supplied to the trapping device has reached a predefined value.

13. The method of the preceding claim, further comprising at least one of:
controlling flows of at least one of the fluid sample and the solvent based on said property;
controlling operation of a loading system based on said property;
separating compounds of the fluid sample trapped at the trapping device.

## Patentansprüche

1. Flüssigkeitschromatografiesystem, das aufweist:
eine Trenneinheit (68) zum Trennen der Verbindungen einer Flüssigkeitsprobe (8),
eine Einfangeinrichtung (12, 15, 19, 33, 65) zum Einfangen der Verbindungen der Flüssigkeitsprobe,
eine Steuereinheit (13, 17, 22, 35, 70) zum Steuern der Zufuhr eines Lösemittel-Spülvolumens und/oder einer Flüssigkeitsprobe zur Einfangeinrichtung (12, 15, 19) auf der Grundlage einer Eigenschaft, die in Zusammenhang mit einer Menge der durch die Einfangeinrichtung (12, 15, 19) fließenden Flüssigkeit steht,
eine Detektionseinheit (10, 16, 18, 20, 34, 63), die über ein Fluid mit der Einfangeinrichtung verbunden ist, wobei die Detektionseinheit zum Ermitteln der Eigenschaft der durch die Einfangeinrichtung fließenden Flüssigkeit dient, um einen gesteuerten Einfangprozess durchzuführen,
ein Beschickungssystem (11, 14, 21, 23, 53) zum Zuführen der Flüssigkeitsprobe und/oder des Lösemittel-Spülvolumens zur Einfangeinrichtung, und
eine Strömungspfad-Umschalteinheit (64), wobei
das Beschickungssystem über ein Fluid mit der Einfangeinrichtung verbunden ist, wenn sich die Strömungspfad-Umschalteinheit in einer Probenzufuhrposition befindet, und
der Zulauf der Einfangeinrichtung mit einer dem Erzeugen der Strömung der mobilen Phase dienenden Strömungserzeugungseinrichtung (67) und der Ablauf der Einfangeinrichtung über ein Fluid mit der Trenneinheit (68) verbunden ist, wenn sich die Strömungspfad-Umschalteinheit in einer Probenanalyseposition befindet;
wobei die Steuereinheit zum Anhalten einer Strömung des der Einfangeinrichtung zugeführten Lösemittels dient, sobald ein der Einfangeinrichtung zugeführtes Gesamtvolumen einen vordefinierten Wert erreicht hat.

2. Flüssigkeitschromatografiesystem nach Anspruch 1, wobei
als Eigenschaft mindestens eine der folgenden Eigenschaften infrage kommt: eine volumetrische Eigenschaft, die Strömung einer durch die Einfangeinrichtung fließenden Flüssigkeit, ein Gesamtvolumen der durch die Einfangeinrichtung geflossenen Flüssigkeit, eine in Zusammenhang mit der Strömung stehende Eigenschaft.

3. Flüssigkeitschromatografiesystem nach Anspruch 1 oder 2, wobei die Steuereinheit mindestens einem der folgenden Zwecke dient:
Überwachen der Strömung des der Einfangeinrichtung zugeführten Lösemittels;
Detektieren von Leckagen durch Vergleichen einer zugemessenen Strömung mit einer durch die Detektionseinheit ermittelten Strömung.

4. Flüssigkeitschromatografiesystem nach einem der Ansprüche 1 bis 3, wobei:
als Detektionseinheit mindestens einer der folgenden Sensoren infrage kommt: ein Strömungssensor, ein volumetrischer Strömungssensor, ein Massenströmungssensor und ein Drucksensor, wobei der Drucksensor vorzugsweise zum Ermitteln eines Druckabfalls in einer im Strömungspfad vor oder nach der Einfangeinrichtung angeordneten Kapillare dient.

5. Flüssigkeitschromatografiesystem nach einem der Ansprüche 1 bis 4, das mindestens eines der folgenden Merkmale aufweist:
die Detektionseinheit ist im Strömungspfad vor der Einfangeinrichtung angeordnet;
die Detektionseinheit ist nahe dem Zulauf der Einfangeinrichtung angeordnet, wobei der Ablauf der Detektionseinheit über ein Fluid mit dem Zulauf der Einfangeinrichtung verbunden ist.

6. Flüssigkeitschromatografiesystem nach einem der Ansprüche 1 bis 4, das mindestens eines der folgenden Merkmale aufweist:
die Detektionseinheit ist im Strömungspfad nach der Einfangeinrichtung angeordnet;
die Detektionseinheit ist nahe dem Ablauf der Einfangeinrichtung angeordnet, wobei der Ablauf der Einfangeinrichtung über ein Fluid mit dem Zulauf der Detektionseinheit verbunden ist.

7. Flüssigkeitschromatografiesystem nach einem der Ansprüche 1 bis 4, das mindestens eines der folgenden Merkmale aufweist:
die Detektionseinheit weist eine erste Detektionseinheit, die im Strömungspfad vor der Einfangeinrichtung angeordnet ist, und eine zweite Detektionseinrichtung auf, die im Strömungspfad nach der Einfangrichtung angeordnet ist.

8. Flüssigkeitschromatografiesystem nach einem der obigen Ansprüche, wobei:
als Einfangeinrichtung eine Schleife dient, die ganz oder teilweise mit einer Flüssigkeitsprobe gefüllt wird, wobei die Steuereinheit vorzugsweise zum Steuern der Zufuhr des Lösemittels und der Flüssigkeitsprobe zur Schleife
derart dient, dass die Schleife ganz oder teilweise gefüllt wird.

9. Flüssigkeitschromatografiesystem nach einem der obigen Ansprüche, das eines oder mehrere der folgenden Merkmale aufweist:
bei der Einfangeinrichtung handelt es sich um eine mit einem Packungsmaterial gefüllte Säule;
bei der Einfangeinrichtung handelt es sich um eine Einfangsäule;
die Einfangeinrichtung dient zum Anreichern von Verbindungen der durch die Einfangeinrichtung fließenden Flüssigkeitsprobe.

10. Flüssigkeitschromatografiesystem nach einem der obigen Ansprüche, wobei das Beschickungssystem eine Probenzufuhreinheit und das System ferner eines oder mehrere der folgenden Merkmale aufweist:
die Probenzufuhreinheit dient zum Auswählen einer aus der Vielzahl von verschiedenen Proben und Lösemitteln und zum Zuführen eines genau definierten Volumens der ausgewählten Flüssigkeitsprobe zur Einfangeinrichtung;
die Probenzufuhreinheit weist eine Zumesseinrichtung auf, die zum Aufnehmen eines genau definierten Volumens der Flüssigkeitsprobe und zum Zuführen des Volumens der Flüssigkeitsprobe zur Einfangeinrichtung dient;
die Probenzufuhreinheit weist eine Mikrotiterplatte mit einer Vielzahl von verschiedenen Proben auf.

11. Flüssigkeitschromatografiesystem nach einem der vorhergehenden Ansprüche, wobei die Strömungspfad-Umschalteinheit von der Probenbeschickungsposition zur Probenanalyseposition umgeschaltet wird, sobald der Einfangeinrichtung ein vordefiniertes Lösemittel-Spülvolumen zugeführt worden ist.

12. Verfahren zum Beschicken einer Einfangeinrichtung (12, 15, 19) mit einer Fluidprobe (8), wobei das Verfahren die folgenden Schritte aufweist:
Zuführen der Fluidprobe (8) zur Einfangeinrichtung (12; 15; 19);
Einfangen von Verbindungen der Fluidprobe (8) in der Einfangeinrichtung;
Zuführen eines Spülvolumens (9) des Lösemittels zur Einfangeinrichtung (12; 15; 19);
Ermitteln einer Eigenschaft, die mit einer Menge des durch die Einfangeinrichtung fließenden Fluids in Verbindung steht;
Steuern der Zufuhr des Volumens der Flüssigkeitsprobe und/oder des Spülvolumens des Lösemittels zur Einfangeinrichtung (12, 15, 19) auf der Grundlage der Eigenschaft des durch die Einfangeinrichtung fließenden Fluids, und
Anhalten einer Strömung des der Einfangeinrichtung zugeführten Lösemittels, sobald ein der Einfangeinrichtung zugeführtes Gesamtvolumen einen vordefinierten Wert erreicht hat.

13. Verfahren nach dem vorhergehenden Anspruch, das mindestens einen der folgenden Schritte aufweist:
Steuern der Strömungen der Flüssigkeitsprobe und/oder des Lösemittels auf der Grundlage der Eigenschaft;
Steuern der Funktion eines Beschickungssystems auf der Grundlage der Eigenschaft;
Trennen der in der Einfangeinrichtung eingefangenen Verbindungen der Fluidprobe.

## Revendications

1. Système de chromatographie liquide, comprenant
une unité de séparation (68) adaptée pour la séparation de composés d'un échantillon de liquide,
un dispositif de piégeage (12, 15, 19, 33, 65) adapté pour piéger des composés de l'échantillon de liquide,
une unité de commande (13, 17, 22, 35, 70) adaptée pour commander la fourniture d'au moins un volume de balayage de solvant et un échantillon de liquide au dispositif de piégeage (12, 15, 19), basée sur une propriété liée à une quantité de liquide passant par le dispositif de piégeage (12, 15, 19),
une unité de détection (10, 16, 18, 20, 34, 63), couplée fluidiquement au dispositif de piégeage, l'unité de détection étant adaptée pour déterminer ladite propriété du liquide passant par le dispositif de piégeage pour l'exécution d'un processus de piégeage commandé,
un système de chargement (11, 14, 21, 23, 53) adapté pour fournir au moins un échantillon de liquide et un volume de balayage de solvant au dispositif de piégeage, et
une unité d'intercalation de trajet d'écoulement (64), dans laquelle
dans le cas où l'unité d'intercalation de trajet d'écoulement est dans une position de chargement d'échantillon, ce système de chargement est couplé fluidiquement au dispositif de piégeage et,
dans le cas où l'unité d'intercalation de trajet d'écoulement est dans une position d'analyse d'échantillon, l'entrée du dispositif de piégeage est couplée à un dispositif de génération d'écoulement (67) adapté pour fournir un écoulement de phase mobile et la sortie du dispositif de piégeage est couplée fluidiquement à l'unité de séparation (68) ;
dans lequel l'unité de commande est adaptée pour arrêter un écoulement de solvant fourni au dispositif de piégeage dès qu'un volume total fourni au dispositif de piégeage a atteint une valeur prédéfinie.

2. Système de chromatographie liquide selon la revendication 1, dans lequel
ladite propriété est l'une des propriétés suivantes : propriété volumétrique, écoulement d'un liquide passant par le dispositif de piégeage, volume total de liquide passé par le dispositif de piégeage, propriété liée à l'écoulement.

3. Système de chromatographie liquide selon la revendication 1 ou 2, dans lequel l'unité de commande est adaptée pour au moins :
la surveillance de l'écoulement de solvant fourni au dispositif de piégeage ;
la détection de fuites en comparant un écoulement mesuré à un écoulement déterminé par l'unité de détection.

4. Système de chromatographie liquide selon l'une des revendications 1 à 3 dans lequel :
l'unité de détection est au moins l'une des unités suivantes : capteur d'écoulement, capteur d'écoulement volumétrique, capteur d'écoulement massique et capteur de pression, le capteur de pression étant de préférence adapté pour déterminer une chute de pression d'un capillaire situé en amont ou en aval du dispositif de piégeage.

5. Système de chromatographie liquide selon l'une des revendications 1 à 4 comprenant au moins l'une des unités suivantes :
l'unité de détection est située en amont du dispositif de piégeage ;
la détection est située à côté de l'entrée du dispositif de piégeage, la sortie de l'unité de détection étant couplée fluidiquement à l'entrée du dispositif de piégeage.

6. Système de chromatographie liquide selon l'une des revendications 1 à 4, comprenant au moins l'une des unités suivantes :
l'unité de détection est située en aval du dispositif de piégeage ;
l'unité de détection est située à côté de la sortie du dispositif de piégeage, la sortie de l'unité de piégeage étant couplée fluidiquement à l'entrée de l'unité de détection.

7. Système de chromatographie liquide selon l'une des revendications 1 à 4, comprenant au moins l'un des éléments suivants :
l'unité de détection comprend un premier dispositif de détection situé en amont du dispositif de piégeage et un deuxième dispositif de détection situé en aval du dispositif de piégeage.

8. Système de chromatographie liquide selon l'une des revendications ci-dessus, dans lequel :
le dispositif de piégeage est une boucle adaptée pour être remplie partiellement ou complètement d'un échantillon de liquide, dans laquelle de préférence, l'unité de commande est adaptée pour commander la fourniture de l'échantillon de solvant et de liquide à la boucle de manière à réaliser un remplissage complet ou partiel de la boucle ;

9. Système de chromatographie liquide selon l'une des revendications ci-dessus, comprenant en outre un ou plusieurs des dispositifs suivants :
le dispositif de piégeage est une colonne remplie de matières d'emballage ;
le dispositif de piégeage est une colonne de piégeage ;
le dispositif de piégeage est adapté pour réaliser un enrichissement de composés de l'échantillon de liquide traversant le dispositif de piégeage.

10. Système de chromatographie liquide selon l'une des revendications ci-dessus, dans lequel le système de chargement comprend une unité de fourniture d'échantillon, le système comprenant en outre une ou plusieurs des unités suivantes :
l'unité d'alimentation d'échantillon est adaptée pour sélectionner un échantillon et un solvant parmi différents échantillons et solvants, et pour fournir un volume bien défini de l'échantillon de liquide sélectionné au dispositif de piégeage ;
l'unité d'alimentation de l'échantillon comprend un dispositif de mesurage, ce dernier étant adapté pour aspirer un volume bien défini de l'échantillon de liquide et pour fournir le volume d'échantillon de liquide au dispositif de piégeage ;
l'unité d'alimentation de l'échantillon comprend une plaque ondulée avec une pluralité d'échantillons différents.

11. Le système de chromatographie liquide selon l'une des revendications ci-dessus, dans lequel dès qu'un volume de balayage de solvant prédéfini a été fourni au dispositif de piégeage, l'unité d'intercalation du trajet d'écoulement passe de la position de charge d'échantillon à la position d'analyse d'échantillon.

12. Méthode de chargement d'un échantillon de fluide (8) dans le dispositif de piégeage (12, 15, 19), la méthode comprenant :
la fourniture de l'échantillon de fluide (8) au dispositif de piégeage (12, 15, 19) ;
le piégeage de composants de l'échantillon de fluide (8) au dispositif de piégeage ;
la fourniture d'un volume de balayage (9) de solvant au dispositif de piégeage (12, 15, 19) ;
la détermination d'une propriété liée à une quantité de fluide passant par le dispositif de piégeage ;
la commande de la fourniture d'au moins un échantillon de fluide et du volume de balayage de solvant au dispositif de piégeage (12, 15, 19), basée sur ladite propriété du fluide passant par le dispositif de piégeage, et
l'arrêt d'un écoulement de solvant alimenté au dispositif de piégeage dès qu'un volume total fourni au dispositif de piégeage a atteint une valeur prédéfinie.

13. Méthode selon la revendication qui précède, comprenant également l'un au moins des éléments suivants :
commande des écoulements d'au moins un échantillon de fluide et de solvant basée sur ladite propriété ;
commande du fonctionnement d'un système de chargement basée sur ladite propriété ;
séparation des composants de l'échantillon de fluide piégé au niveau du dispositif de piégeage.
